# EUROPEAN PATENT APPLICATION

(11) **EP 4 620 910 A1**
(43) Date of publication of application: **24.09.2025**
(21) Application number: 23954009.9
(22) Date of filing: 07.12.2023
(51) Int. Cl.: C01B 32/354, H01M 10/052, H01M 4/62, H01M 4/13

(54) **METHOD FOR PREPARING MODIFIED CARBON NANOTUBE, MODIFIED CARBON NANOTUBE, NEGATIVE ELECTRODE SLURRY, AND BATTERY**

(30) Priority: 27.09.2023 CN 202311272918
(71) Applicant: Eve Power Co., Ltd., Jingmen, Hubei 448000 (CN)
(72) Inventor: WEN, Xuan, Jingmen, Hubei 448000 (CN); LIU, Fanfen, Jingmen, Hubei 448000 (CN); ZHOU, Zhihang, Jingmen, Hubei 448000 (CN); JIN, Lun, Jingmen, Hubei 448000 (CN)
(74) Representative: Berggren Oy
(86) International application number: PCT/CN2023/137158
(87) International publication number: WO 2025/065876

(57) **Abstract**

Modified carbon nanotubes, A method for preparing the same, a negative electrode slurry, and a battery are provided. The method includes: carboxylating carbon nanotubes; adding the carboxylated carbon nanotubes in a first mixed acid solution to obtain first inner wall-carboxylated carbon nanotubes; adding the first inner wall-carboxylated carbon nanotubes in a second mixed acid solution to obtain second inner wall-carboxylated carbon nanotubes; and mixing the second inner wall-carboxylated carbon nanotubes and a polyethylene glycol to obtain the modified carbon nanotubes.

## Description

This application claims priority to Chinese Patent Application No. 202311272918.7, filed on September 27, 2023, the entire disclosures of which are incorporated herein by reference.

### TECHNICAL FIELD

The present disclosure belongs to the field of lithium batteries, and particularly relates to modified carbon nanotubes, a method for preparing the same, a negative electrode slurry, and a battery.

### BACKGROUND

In a lithium battery, a conductive agent mainly plays a role in increasing the conductive contact among various active substances and improving the electron conductivity. Positive electrode materials are mostly a transition metal phosphate, which has a poor conductivity. Negative electrode graphite may expand and contract during the repeatedly charging and discharging process, so that the conductive property is seriously damaged. Although the amount of the conductive agent is low (about 2% of the cost of lithium ions), there is an irreplaceable effect in the battery system.

In the related art, the contact form of the conductive agent used in the market includes a point, a line, and/or a face contact conductive network. The conventional conductive agent carbon black SP and conductive graphite are rigid nanoparticles, which form a point to point contact to increase contact between active substances. The novel conductive agents, including carbon nanofibers, carbon nanotubes, graphene, and the like, have a flexible long chain and may form a line to point contact to increase contact between active substances. Graphene is a flexible sheet that may form a face to point contact to increase contact between active substances. The novel conductive agents have better conductive performance than the conventional conductive agent due to the higher contact area. However, the graphene-based conductive agent is expensive and therefore limited in use.

As a member of the novel conductive agent, carbon nanotubes are widely used in various industries because of their good conductivity and simple preparation method. In particular, in the field of lithium ion batteries, the utilization of carbon nanotubes greatly improves the conductivity of lithium batteries.

In order to improve the conductivity of the carbon nanotubes, doping modification, coating modification, and the like for the carbon nanotubes are mainly applied in the related art. However, the prepared carbon nanotubes have a relatively poor mechanical property.

### TECHNICAL PROBLEMS

The present disclosure provides modified carbon nanotubes, a method for preparing the same, a negative electrode slurry, and a battery, which can solve the above technical problems.

### TECHNICAL SOLUTIONS

In a first aspect, embodiments of the present disclosure provide a method for preparing modified carbon nanotubes comprising the steps of:
adding carbon nanotubes in a nitric acid solution to react at 65°C to 75°C for 10 h to 14 h, followed by washing and drying to obtain carboxylated carbon nanotubes, wherein a mass fraction of HNO₃ in the nitric acid solution is greater than or equal to 20%;
adding the carboxylated carbon nanotubes in a first mixed acid solution to react for 10 h to 14 h, followed by washing and drying to obtain first inner wall-carboxylated carbon nanotubes, wherein the first mixed acid solution is a mixed solution of concentrated nitric acid and concentrated hydrochloric acid in a volume ratio of 1:2 to 5, a mass fraction of HNO₃ in the concentrated nitric acid is 60% to 70%, and a mass fraction of HCl in the concentrated hydrochloric acid is 30% to 38%;
adding the first inner wall-carboxylated carbon nanotubes in a second mixed acid solution, standing for 10 h to 14 h, followed by washing and drying to obtain second inner wall-carboxylated carbon nanotubes, wherein the second mixed acid solution is a mixed solution of concentrated sulfuric acid and concentrated hydrochloric acid in a volume ratio of 1:1 to 1.5; and
mixing the second inner wall-carboxylated carbon nanotubes, a polyethylene glycol, a dispersing agent, and water to obtain a mixed system, controlling a pH of the mixed system to be 1 to 4, and reacting the mixed system under reflux in presence of nitrogen at 78°C to 85°C for 3 h to 5 h, followed by washing and drying to obtain the modified carbon nanotubes.

In a second aspect, embodiments of the present disclosure provide modified carbon nanotubes prepared by using the method for preparing the modified carbon nanotubes as described above.

In a third aspect, embodiments of the present disclosure provide a negative electrode slurry comprising a conductive agent that is the modified carbon nanotubes as described above.

In a fourth aspect, embodiments of the present disclosure provide a battery comprising a negative electrode sheet prepared using the negative electrode slurry as described above.

### BENEFICIAL EFFECT

The present disclosure has the following advantageous effects: the carbon nanotube prepared by the method provided according to the present disclosure has a carboxyl group on the inner wall, and the carboxyl group on the inner wall reacts with the hydroxyl group of the polyethylene glycol, so that the carboxyl group on the inner wall and the polyethylene glycol form a "bridging" structure in the tube of the carbon nanotube. Therefore, the diameter of the carbon nanotube is reduced, and the mechanical property, such as tensile property, of the carbon nanotube is improved, which is beneficial to preventing the peeling phenomenon of the pole sheet caused by volume change during charging and discharging. The carbon nanotube with a smaller diameter forms a dedicated transport channel of lithium ions, thereby greatly improving the conductive property of the lithium ions in the lithium battery.

### BRIEF DESCRIPTION OF THE DRAWINGS

FIG. 1 is a system for testing the mechanical properties of carbon nanotubes according to the present disclosure.
FIG. 2 is a schematic flowchart of a method for preparing modified carbon nanotubes according to some embodiments of the present disclosure.
FIG. 3 is a schematic view of a battery according to some embodiments of the present disclosure.
FIG. 4 is a schematic view of the core of FIG. 3.

### DETAILED DESCRIPTION

The present disclosure provides a method for preparing modified carbon nanotubes, which effectively improves the conductivity of the carbon nanotubes. The specific method is used to give a reduced pore size and an improved tensile strength of the carbon nanotubes. When the modified carbon nanotubes prepared by the method in the present disclosure is applied to a lithium battery, an improved conductivity of the lithium battery can be obtained. Furthermore, the modified carbon nanotubes have higher tensile strength, so that the peeling phenomenon caused by volume change of the lithium battery during charging and discharging can be prevented, the structural stability of the lithium battery is improved, and the circulation performance of the lithium battery is optimized.

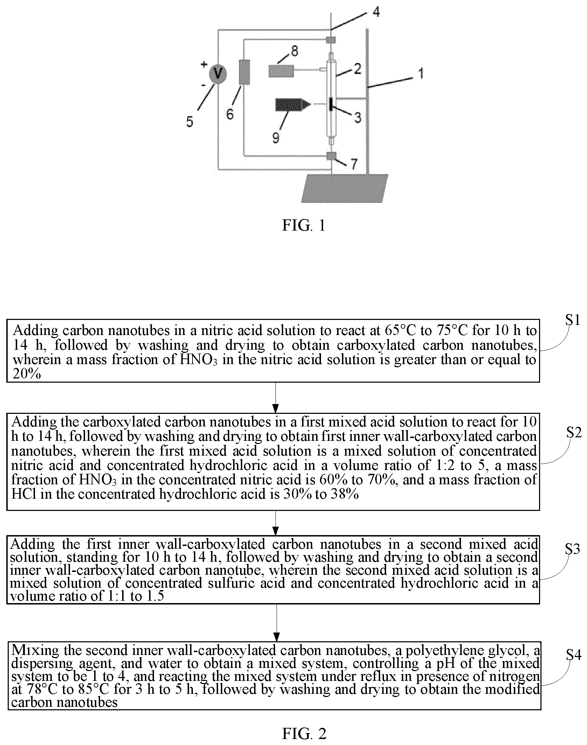

According to a first aspect of the present disclosure, there is provided a method for preparing modified carbon nanotubes. Referring to FIG. 2, the method includes the steps of: S1. adding carbon nanotubes in a nitric acid solution (in which a mass fraction of HNO₃ is greater than or equal to 20%) to react for 10 h to 14 h at 65°C to 75°C, followed by washing and drying, to obtain carboxylated carbon nanotubes; S2. adding the carboxylated carbon nanotubes in a first mixed acid solution to react for 10 h to 14 h, followed by washing and drying to obtain first inner wall-carboxylated carbon nanotubes, in which the first mixed acid solution is a mixed solution of concentrated nitric acid and concentrated hydrochloric acid in a volume ratio of 1:2 to 5, a mass fraction of HNO₃ in concentrated nitric acid is 60% to 70%, and a mass fraction of HCl in concentrated hydrochloric acid is 30% to 38%; S3. adding the first inner wall-carboxylated carbon nanotubes in a second mixed acid solution, standing for 10 h to 14 h, followed by washing and drying to obtain second inner wall-carboxylated carbon nanotubes, in which the second mixed acid solution is a mixed solution of concentrated sulfuric acid and concentrated hydrochloric acid in a volume ratio of 1:1 to 1.5; S4. mixing the second inner wall-carboxylated carbon nanotubes, a polyethylene glycol, a dispersing agent, and water to obtain a mixed system, controlling a pH of the mixed system to be 1 to 4, and reacting the mixed system under reflux in presence of nitrogen at 78°C to 85°C for 3 to 5 h, followed by washing and drying to obtain the modified carbon nanotubes.

In S1, the temperature for reacting may be, for example, 65°C, 70°C, or 75°C. The time for reacting may be, for example, 10 h, 11 h, 12 h, 13 h, or 14 h. The mass fraction of HNO₃ may be, for example, 20%, 25%, 30%, or 40%. In S2, the time for reacting may be, for example, 10 h, 11 h, 12 h, 13 h, or 14 h. The volume ratio of concentrated nitric acid to concentrated hydrochloric acid may be, for example, 1: 2, 1: 3, 1: 4, or 1: 5. The mass fraction of HNO₃ in concentrated nitric acid may be, for example, 60%, 65%, or 70%. The mass fraction of HCl in concentrated hydrochloric acid may be, for example, 30%, 33%, 35%, or 38%. In S3, the time for standing may be, for example, 10 h, 11 h, 12 h, 13 h, or 14 h. The volume ratio of concentrated sulfuric acid to concentrated hydrochloric acid may be, for example, 1: 1, 1:1.1, 1:1.2, 1:1.3, 1:1.4, or 1:1.5. In S4, the pH may be, for example, 1, 2, 3, or 4. The temperature for reacting may be, for example, 78°C, 80°C, or 85°C. The time for reacting may be, for example, 3 h, 4 h, or 5 h. Each of the above reaction conditions is not limited to the listed numerical values, and other numerical values not listed within the numerical ranges are applicable.

In the method for preparing the modified carbon nanotubes according to the present disclosure, groups such as nitrile groups, hydroxyl groups, and ester groups on the outer surfaces and inner walls of the carbon nanotubes are oxidized by treating with the nitric acid in S1 to form carboxyl groups, so that the groups other than the carboxyl group on the outer surfaces and inner walls of the carbon nanotubes are substantially oxidized to form the carboxyl group at a specific reaction temperature and reaction time. In S2, the carboxylated carbon nanotubes are reacted in the first mixed acid solution, which is obtained by combining concentrated nitric acid and concentrated hydrochloric acid in a specific proportion to possess a strong corrosive property, so that the carboxyl groups on the outer surfaces of the carbon nanotubes can be removed, but the carboxyl groups on the inner walls of the carbon nanotubes are substantially retained without being removed, because the space in the inner walls of the carbon nanotubes are relatively small. Then, in S3, the first inner wall-carboxylated carbon nanotubes in which the carboxyl groups on the outer surface have been removed are further subjected to acid treatment in a strong acid condition to remove byproducts generated on the outer surfaces of the carbon nanotubes during acid treatment in S2, so as to avoid adverse effects of these byproducts on reaction of the carbon nanotubes with polyethylene glycol. Then, the second inner wall-carboxylated carbon nanotubes post multiple acid treatments are reacted with polyethylene glycol and the dispersing agent under reflux at a specific pH and temperature, so that the carboxyl groups on the inner walls of the carbon nanotubes are reacted with hydroxyl groups of the polyethylene glycol to generate a "bridging" structure in the inner of the carbon nanotubes. As a result, the diameter of the carbon nanotube can be reduced, the mechanical properties of the carbon nanotube, such as tensile properties, are improved, and the peeling off of the pole sheets caused by volume change during charging and discharging can be prevented. Meanwhile, the carbon nanotubes with a smaller diameter form a specific transport channel for lithium ions, thereby greatly improving the lithium ion conductivity in the lithium battery.

In S1, the carbon nanotubes are first treated with the nitric acid solution, so that the groups other than the carboxyl group on the outer surface and inner wall of the carbon nanotubes are converted into the carboxyl group, and the amount of the carboxyl groups on the carbon nanotubes is increased, thereby facilitating the reaction of the carbon nanotubes with sufficient carboxyl groups and the hydroxyl groups of the polyethylene glycol. In S2, the carboxyl groups on the outer surfaces of the carbon nanotubes are removed using the first mixed acid solution, so that only the carboxyl groups on the inner walls of the carbon nanotubes react with the polyethylene glycol. The removal of the carboxyl groups on the outer surfaces of the carbon nanotubes can prevent the polyethylene glycol from tending to react with the carboxyl groups on the outer surfaces of the carbon nanotubes due to the small inner space of the carbon nanotube, and avoid only a very small amount of polyethylene glycol to react with the carboxyl groups on the inner walls of the carbon nanotubes. Otherwise, the "bridging" structure cannot be well formed, and the diameter of the carbon nanotubes cannot be reduced, so that the tensile strength and the lithium ion conductivity of the carbon nanotubes cannot be improved. Furthermore, in S2, the carboxyl groups on the outer surfaces of the carbon nanotubes are removed in advance, so that the amount of polyethylene glycol can be reduced, preventing excessive polyethylene glycol due to the grafting of the polyethylene glycol on the outer surface of the carbon nanotube, and reducing the cost of raw materials. The carbon nanotubes are subjected to acid treatment again in S3 to remove byproducts generated in the acid treatment in S2 on the outer surface of the carbon nanotubes, preventing the byproducts from influencing the reaction of the carbon nanotubes with the polyethylene glycol.

In some embodiments, in S2, the volume ratio of concentrated nitric acid to concentrated hydrochloric acid in the first mixed acid solution is 1: 3. In this case, the carboxyl groups on the outer surfaces of the carbon nanotubes can be fully removed without affecting the carboxyl groups on the inner walls of the carbon nanotubes.

In some embodiments, in S1, the mass fraction of HNO₃ in the nitric acid solution is 25% to 40%. In this case, the nitric acid is effective in oxidizing the groups on the outer surface and inner wall of the carbon nanotubes to form the carboxyl group, while avoiding waste of resources caused by the use of excessive HNO₃.

In some embodiments, in S4, the mass ratio of the second inner wall-carboxylated carbon nanotubes, the polyethylene glycol, and the dispersing agent is 55 to 85: 20 to 50: 3 to 5. The mass ratio of the second inner wall-carboxylated carbon nanotubes, the polyethylene glycol, and the dispersing agent may be, for example, 55:50:5, 58:19:4, 60:30:5, 65:40:5, 70:38:5, 70:40:4, 75:21:5, or 85:20:3, which is not limited to the listed numerical values, and other numerical values not listed within the numerical range are applicable. By controlling the ratio of various materials, the carbon nanotubes have good dispersibility in the reaction system, so that the carboxyl groups on the inner walls of the carbon nanotubes can be sufficiently reacted with the polyethylene glycol to form a stable "bridging" structure in the inner of the carbon nanotube, facilitating the reduce of the diameter of the carbon nanotube, improving the stability of the carbon nanotubes after reducing the diameter thereof.

In some embodiments, in S1, the diameter of the carbon nanotubes is 10 nm to 30 nm. Examples may be 10 nm, 12 nm, 15 nm, 18 nm, 20 nm, 22 nm, 25 nm, 28 nm, or 30 nm, which is not limited to the numerical values listed, and other numerical values not listed within the numerical range are also applicable.

In some embodiments, in S1, the carbon nanotubes are multi-walled carbon nanotubes. The multi-walled carbon nanotubes have many active groups on the outer surface and inner wall thereof, so that more groups on the carbon nanotubes are oxidized to form the carboxyl group, and the amount of the carboxyl groups on the carbon nanotubes is increased. In this way, more carboxyl groups can be generated and reacted with the polyethylene glycol on the inner walls of the carbon nanotubes, so that the diameter of the carbon nanotubes can be obviously reduced, and the lithium ion conductivity of the carbon nanotubes can be improved.

In some embodiments, in S4, the dispersing agent includes at least one of an ionic surfactant or a nonionic surfactant.

In some embodiments, the ionic surfactant includes at least one of sodium dodecyl benzene sulfonate, sodium dodecyl sulfate, or dodecyl dimethyl benzyl ammonium chloride. The nonionic surfactant includes TNWDIS. Herein, the TNWDIS refers to a nonionic surfactant that is free of alkylphenyl ethoxylates (APEOs) and contains an aromatic group.

In some embodiments, the dispersing agent is TNWDIS. The use of TNWDIS is advantageous for giving a good dispersibility in the reaction mixture, and therefore the reaction between the carbon nanotubes and the polyethylene glycol is promoted, the diameter of the carbon nanotubes can be reduced, and the lithium ion conductivity of the carbon nanotubes can be improved.

In some embodiments, in S1, the polyethylene glycol has a number average molecular weight of 600 to 4,000 g/mol, for example, 600 g/mol, 1,000 g/mol, 1,500 g/mol, 2,000 g/mol, 3,000 g/mol, or 4,000 g/mol, which is not limited to the listed numerical values, and other numerical values not listed within the numerical range are applicable. Controlling the molecular weight of the polyethylene glycol in the range is beneficial to regulating and controlling the diameter of the carbon nanotube, and to providing a supporting force of the polyethylene glycol for the inner of the carbon nanotube, so that the diameter of the carbon nanotubes is stable and is not easy to change, and the mechanical performance of the carbon nanotubes is increased.

In other embodiments, the polyethylene glycol has a number average molecular weight of 1,000 to 2,000 g/mol.

According to a second aspect of the present disclosure, there is provided the modified carbon nanotubes prepared by using the above-described method for preparing the modified carbon nanotubes.

According to a third aspect of the present disclosure, there is provided a negative electrode slurry including a conductive agent which is the modified carbon nanotubes as described above. The use of the modified carbon nanotubes according to the present disclosure as the conductive agent in the negative electrode slurry can improve the conductivity of the negative electrode slurry. In addition, the dispersing agent with good adhesion is attached to the surface of the carbon nanotube, and the stability of the slurry can be improved.

According to a fourth aspect of the present disclosure, there is provided a battery 200 including a negative electrode sheet 100 prepared using the above-described negative electrode slurry. The battery 200 according to the present disclosure has good conductivity inside the battery 200, and has superior tensile property by using the modified carbon nanotubes according to the present disclosure. Furthermore, the peeling of the negative electrode sheet caused by volume change during charging and discharging can be prevented, thereby improving the cycle stability of the battery.

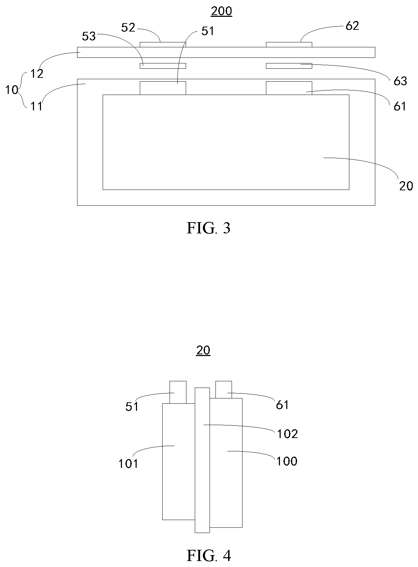

Referring to FIGs. 3 and 4, in some embodiments, the battery 200 includes a housing 10 and a core 20. The housing 10 includes a body 11 and a cover 12. A receiving space is formed in the body 11, in which the core 20 is disposed. The core 20 includes a positive electrode sheet 101, a separator 102, and a negative electrode sheet 100 that are stacked in sequence, and the negative electrode sheet 100 is prepared by using the negative electrode slurry. In some embodiments, the core 20 includes a positive tab 51 connected to the positive electrode sheet 101 and a negative tab 61 connected to the negative electrode sheet 100. The core 20 is filled with an electrolyte. In addition, the battery 200 includes a positive pole 52 and a negative pole 62 provided on the housing 10. The positive pole 52 is provided corresponding to the positive tab 51, and is connected to the positive tab 51 through the housing 10 by a first connecting sheet 53. The negative pole 62 is provided corresponding to the negative tab 61, and is connected to the negative tab 61 through the housing 10 by a second connecting sheet 63.

### Example 1

### (1) Preparation of modified carbon nanotube

The method for preparing the modified carbon nanotubes in Example 1 includes the following steps.

S1. The carbon nanotubes were added in the nitric acid solution in which the mass fraction of HNO₃ was 30%, ultrasonically dispersed at 70°C for 12 h, washed with deionized water for a plurality of times, and dried in vacuum at 25°C for 24 h to obtain the carboxylated carbon nanotubes. The carbon nanotubes were the multi-walled carbon nanotubes with a diameter of 20 nm.

S2. The carboxylated carbon nanotubes were added in the first mixed acid solution, reacted and stirred for 12 h, and washed with deionized water for a plurality of times. Then, the resulting reaction was suction filtrated through a microporous membrane filter with an average pore diameter of 0.2 µm. The obtained precipitates were dried in vacuum at 20 to 25°C for 24 h to obtain the first inner wall-carboxylated carbon nanotubes. The first mixed acid solution was the mixed solution of concentrated nitric acid and concentrated hydrochloric acid in the volume ratio of 1: 3. The mass fraction of HNO₃ in concentrated nitric acid was 65%, and the mass fraction of HCl in concentrated hydrochloric acid was 36%.

S3. The first inner wall-carboxylated carbon nanotubes were added in the second mixed acid solution, with standing for 12 h. Then, the resulting reaction was washed with deionized water for a plurality of times, and dried in vacuum at 25°C for 24 h to obtain the second inner wall-carboxylated carbon nanotubes. The second mixed acid solution was the mixed solution of concentrated sulfuric acid and concentrated hydrochloric acid in the volume ratio of 1:1.2.

S4. The second inner wall-carboxylated carbon nanotubes were mixed with the polyethylene glycol, TNWDIS, and water. The pH of the mixed system was adjusted to be 2. Then, the mixed system reacted under reflux in presence of nitrogen at 80°C for 4 h, washed with deionized water for a plurality of times, and dried in vacuum at 25°C for 24 h to obtain the modified carbon nanotubes. The mass ratio of the second inner wall-carboxylated carbon nanotube, the polyethylene glycol, and TNWDIS was 60: 36: 4. The number average molecular weight of the polyethylene glycol was 1,500 g/mol.

### (2) Preparation of negative electrode slurry

Graphite, the modified carbon nanotubes described above, a thickening agent (CMC), and a binder (SBR) were mixed at a mass ratio of 96.7: 1.0: 1.5: 0.8 to obtain the negative electrode slurry.

### Example 2

### (1) Preparation of modified carbon nanotube

The preparation of the modified carbon nanotubes in Example 2 was substantially same as that in Example 1, except that in S4, a low amount of the dispersing agent was used, and the mass ratio of the second inner wall-carboxylated carbon nanotube, the polyethylene glycol, and the dispersing agent was 63: 30: 1.

### (2) Preparation of negative electrode slurry

The preparation of the negative electrode slurry in Example 2 was same as that in Example 1.

### Example 3

### (1) Preparation of modified carbon nanotube

The preparation of the modified carbon nanotubes in Example 3 was substantially same as that in Example 1, except that in S4, the dispersing agent was sodium dodecyl benzene sulfonate.

### (2) Preparation of negative electrode slurry

The preparation of the negative electrode slurry in Example 3 was same as that in Example 1.

### Example 4

### (1) Preparation of modified carbon nanotube

The preparation of the modified carbon nanotubes in Example 4 was substantially same as that in Example 1, except that in S4, the dispersing agent was sodium dodecyl sulfate.

### (2) Preparation of negative electrode slurry

The preparation of the negative electrode slurry in Example 4 was same as that in Example 1.

### Example 5

### (1) Preparation of modified carbon nanotube

The preparation of the modified carbon nanotubes in Example 5 was substantially same as that in Example 1, except that in S4, the dispersing agent was dodecyl dimethyl benzyl ammonium chloride.

### (2) Preparation of negative electrode slurry

The preparation of the negative electrode slurry in Example 5 was same as that in Example 1.

### Example 6

### (1) Preparation of modified carbon nanotube

The preparation of the modified carbon nanotubes in Example 6 was substantially same as that in Example 1, except that in S4, the number average molecular weight of the polyethylene glycol was 600 g/mol.

### (2) Preparation of negative electrode slurry

The preparation of the negative electrode slurry in Example 6 was same as that in Example 1.

### Example 7

### (1) Preparation of modified carbon nanotube

The preparation of the modified carbon nanotubes in Example 7 was substantially same as that in Example 1, except that in S4, the number average molecular weight of the polyethylene glycol was 1,000 g/mol.

### (2) Preparation of negative electrode slurry

The preparation of the negative electrode slurry in Example 7 was same as that in Example 1.

### Example 8

### (1) Preparation of modified carbon nanotube

The preparation of the modified carbon nanotubes in Example 8 was substantially same as that in Example 1, except that in S4, the number average molecular weight of the polyethylene glycol was 2,000 g/mol.

### (2) Preparation of negative electrode slurry

The preparation of the negative electrode slurry in Example 8 was same as that in Example 1.

### Example 9

### (1) Preparation of modified carbon nanotube

The preparation of the modified carbon nanotubes in Example 9 was substantially same as that in Example 1, except that in S4, the number average molecular weight of the polyethylene glycol was 4,000 g/mol.

### (2) Preparation of negative electrode slurry

The preparation of the negative electrode slurry in Example 9 was same as that in Example 1.

### Example 10

### (1) Preparation of modified carbon nanotube

The preparation of the modified carbon nanotubes in Example 10 was substantially same as that in Example 1, except that in S4, the number average molecular weight of the polyethylene glycol was 5,000 g/mol.

### (2) Preparation of negative electrode slurry

The preparation of the negative electrode slurry in Example 10 was same as that in Example 1.

### Comparative Example 1

### (1) Preparation of modified carbon nanotube

The preparation of the modified carbon nanotubes in Comparative Example 1 was substantially same as that in Example 1, except that the carbon nanotubes were not subjected to the acid treatment in S2.

### (2) Preparation of negative electrode slurry

The preparation of the negative electrode slurry in Comparative Example 1 was same as that in Example 1.

### Comparative Example 2

### (1) Preparation of modified carbon nanotube

The preparation of the modified carbon nanotubes in Comparative Example 2 was substantially same as that in Example 1, except that the carbon nanotubes were not subjected to the acid treatment in S3.

### (2) Preparation of negative electrode slurry

The preparation of the negative electrode slurry in Comparative Example 2 was same as that in Example 1.

### Comparative Example 3

### (1) Preparation of modified carbon nanotube

The preparation of the modified carbon nanotubes in Comparative Example 3 was substantially same as that in Example 1, except that in S4, no polyethylene glycol was added.

### (2) Preparation of negative electrode slurry

The preparation of the negative electrode slurry in Comparative Example 3 was same as that in Example 1.

### Comparative Example 4

### (1) Preparation of modified carbon nanotube

The preparation of the modified carbon nanotubes in Comparative Example 4 was substantially same as that in Example 1, except that in S4, no dispersing agent TNWDIS was added.

### (2) Preparation of negative electrode slurry

The preparation of the negative electrode slurry in Comparative Example 4 was same as that in Example 1.

### Comparative Example 5

The carbon nanotubes used in Comparative Example 5 were unmodified carbon nanotubes. That is, the conductive agent used in the preparation of the negative electrode slurry in Comparative Example 5 was the unmodified carbon nanotubes that were used as a raw material in S1 in Example 1.

The preparation of the negative electrode slurry in Comparative Example 5 was same as that in Example 1.

### Test Examples

### 1. Experimental Construction

### (1) Tensile strength test of carbon nanotube

The modified carbon nanotubes or carbon nanotubes prepared in the above Examples 1-10 and Comparative Examples 1-5 were tested for tensile strength by the following steps:
1) FIG. 1 shows a system for testing the mechanical properties of carbon nanotube fibers at high temperature. A three-necked quartz tube 2 was vertically fixed to an iron stand 1. Two ends of the carbon nanotube fiber 3 to be measured were connected to wires 4, respectively. The wires 4 passed through the upper and lower ends of the three-necked quartz tube 2, respectively, and clamped by two clamps 7 of the universal material testing machine 6, so that the carbon nanotube fiber 3 was kept in a vertical state.
2) The two wires 4 were respectively connected to a positive terminal and a negative terminal of a direct current power supply 5, and were applied a constant current value. Before the start of the test, an inert gas was introduced into the three-necked quartz tube 2 by an inert gas access mechanism 8 (for one minute) to remove air. The inert gas is continuously introduced into the three-necked quartz tube 2 during the test.
3) An eyepiece of an infrared thermometer 9 was aligned at the middle part of the carbon nanotube fiber 3 to be measured and turned on in advance. The change of temperatures during the power-on process was recorded (the temperatures were obtained by measuring the radiated energy of the carbon nanotube fiber during the power-on process by the infrared thermometer, and the tensile strength of the carbon nanotube fiber was measured at 1,500°C in the present disclosure).
4) The direct current power supply 5 and the universal material testing machine 6 are turned on at the same time to test the tensile strength of the carbon nanotube fiber to be measured in the high temperature state.

### (2) Conductivity test of negative electrode slurry (represented as resistivity)

The negative electrode slurries prepared in the above Examples 1-10 and the Comparative Examples 1-5 were tested for resistivity by the following steps. First, 10 mL of a negative electrode slurry was placed and uniformly coated on a PP film using a small coater, and then baked in an oven at 100°C for 5 min. Then, the negative electrode slurry was cooled and hardened, and taken out to test resistivity by a four-probe method. The method includes the following steps: (1) a sample to be tested was placed on a test table, and four probes were disposed to respectively contact to a surface of the sample; (2) a current source was turned on to apply a constant current; (3) a voltage difference between two electrodes was measured by a voltmeter and recorded; (4) the above steps were repeated multiple times for different positions and directions, to obtain accurate measurement data. After the measurement was completed, the obtained data were organized, for example to remove abnormal values, averaging, and the like, and the resistivity of the sample was calculated. It is also necessary to analyze and compare the measurement results, compare the measurement results with the standard values, and judge the test error and reliability.

### (3) Cycle performance test for battery

Negative electrode sheets were prepared using the negative electrode slurries in the above Examples 1-10 and the Comparative Examples 1-5. The positive electrode active material, the conductive agent (CB, conductive carbon black), the dispersing agent (PVP, polyvinylpyrrolidone), and the binder (PVDF) were mixed at a mass ratio of 97.2: 0.5: 0.6: 1.7 to prepare a positive electrode slurry from which the positive electrode sheet was made. A battery was prepared by assembling the positive electrode sheet, the separator, and the negative electrode sheet, and injecting the electrolyte (1mol/L LiPF6 in a mixed solvent of ethylene carbonate (EC) and dimethyl carbonate EDC (1: 1 by volume)).

The resulting battery was then subjected to a cycle performance test with the following steps:
1) At 25°C, ① the battery was discharged at a constant current of 1 C (A) to 2.5 V, left standing for 5 min, ② the battery was charged at a constant current of 1 C (A) and a constant voltage, with a cut-off voltage of 3.65 V and a cut-off current of 0.05 C (A), left standing for 5 min, and ③ the battery was discharged at a constant current of 1 C (A) to 2.5 V, the above operations were repeated for 13 times, and the last discharge capacity was recorded as an initial capacity in Q0; 2) standing for 3 min; 3) cyclically discharging at a current of 1 C to 2.5 V; 4) standing for 1 h; 5) charging at a constant current of 1 C and a constant voltage to 3.65 V, with a cut-off current of 0.05 C; 6) standing for 1 h; 7) repeating the above operations for 3 to 6 times. When the above operations for the battery were repeated for 1500 cycles, the discharge capacity was recorded as Q1. The capacity retention =Q1/Q0×100%.

### 2. Experimental results

The test results of the various properties in the above Examples 1-10 and the Comparative Examples 1-5 were shown in table.

**Table 1 Test results of various properties in Examples 1-10 and Comparative Examples 1-5**

| No. | Carbon nanotube | Negative electrode slurry | Battery |
|---|---|---|---|
| | Tensile Strength (GPa) | Resistivity (Ω·cm-1) | Cyclic Capacity Retention (%) 1C/1C 25°C |
| Example 1 | 7.16 | 1.27 | 85.13 |
| Example 2 | 5.36 | 1.78 | 81.13 |
| Example 3 | 5.26 | 2.05 | 80.56 |
| Example 4 | 5.18 | 2.14 | 78.46 |
| Example 5 | 5.35 | 2.08 | 80.26 |
| Example 6 | 5.94 | 1.53 | 80.76 |
| Example 7 | 6.82 | 1.36 | 83.54 |
| Example 8 | 7.08 | 1.34 | 84.95 |
| Example 9 | 6.72 | 1.39 | 82.64 |
| Example 10 | 4.86 | 2.25 | 77.59 |
| Comparative Example 1 | 3.16 | 2.15 | 68.46 |
| Comparative Example 2 | 3.05 | 2.31 | 68.10 |
| Comparative Example 3 | 5.16 | 1.96 | 74.54 |
| Comparative Example 4 | 4.78 | 1.98 | 73.46 |
| Comparative Example 5 | 4.89 | 1.86 | 75.56 |

As can be seen from Table 1, when the carbon nanotubes are modified by the method in the present disclosure, the resulting modified carbon nanotubes have a stronger tensile strength, and the negative electrode slurry prepared by the modified carbon nanotubes has a lower resistivity, i.e, a higher conductivity, as shown in Examples 1 to 10. The higher tensile strength of the modified carbon nanotubes facilitates to prevent the peeling caused by volume change during charging and discharging of the lithium battery, and improve the structural stability of the lithium battery. Good conductivity favors the conductive property of lithium ions in lithium batteries. The tensile strength and the conductivity together optimize the cycle performance of the lithium battery so that the lithium battery can maintain a high capacity retention under multiple charge-discharge cycles. The improvement of tensile strength and conductivity of the modified carbon nanotubes is due to the formation of a "bridging" structure between the polyethylene glycol and the carboxyl groups on the inner walls of the carbon nanotubes. Therefore, the diameter of the carbon nanotubes is reduced, and the mechanical properties of the carbon nanotube, such as the tensile properties, are improved, which is beneficial to preventing the peeling of the pole sheet caused by volume change in the charging and discharging process. The carbon nanotubes with a smaller diameter constitutes a dedicated transport channel of lithium ions, thereby greatly improving the conductivity of lithium ions in the lithium battery.

Further, compared with the carbon nanotubes in Example 1, the carbon nanotubes in Comparative Example 1 are prepared without the acid treatment in S2, the carbon nanotubes in Comparative Example 2 are prepared without the acid treatment in S3, the carbon nanotubes in Comparative Example 3 are prepared without the addition of the polyethylene glycol in S4, the carbon nanotubes in Comparative Example 4 are prepared without the addition of the dispersing agent TNWDIS in S4, and the carbon nanotubes in Comparative Example 5 are prepared without any modification. It can be seen that the tensile strength of the modified or unmodified carbon nanotubes in Comparative Examples 1 to 5 and the conductivity of the negative electrode slurries prepared using the modified or unmodified carbon nanotubes in Comparative Examples 1 to 5 were poor, and the capacity retention of the lithium battery after cycling was also poor. It is shown that each processing step of the preparation method of the modified carbon nanotubes in the present disclosure may have an influence on the tensile strength and conductivity of the final modified carbon nanotube, especially the acid treatment in S2 and S3 and the addition of the polyethylene glycol have an obvious influence on the tensile strength and conductivity of the final carbon nanotube, thereby affecting the cycling performance of the lithium battery. Further, in Examples 1 and 2, the amount of the dispersing agent in Example 2 is low, so that the carbon nanotubes could not be sufficiently dispersed and reacted with the polyethylene glycol, so that the graft ratio of the polyethylene glycol on the inner walls of the carbon nanotubes is less, resulting in the diameter of the carbon nanotubes not to be reduced, the decrease of the tensile strength and the electrical conductivity of the modified carbon nanotube, and the decrease of the cycle performance of the lithium battery. Furthermore, in Examples 1 and 3 to 5, the tensile strength and conductivity of the modified carbon nanotubes in Examples 3 to 5 are reduced compared with those in Example 1. This indicates that the use of the dispersing agent TNWDIS is more favorable for dispersion of the carbon nanotubes and further for grafting reaction of the polyethylene glycol with the carbon nanotube, thereby improving the tensile strength and conductivity of the carbon nanotubes and further optimizing the cycle performance of the lithium battery.

Still further, in Examples 1 and 6 to 9, the molecular weights of the polyethylene glycols used in Examples 1 and 6 to 10 are in the range of 600 to 4,000 g/mol, and the resulting modified carbon nanotubes have better tensile strength and electrical conductivity than those of Example 10 (in which the number average molecular weight of the polyethylene glycol is 5,000 g/mol). This indicates that the molecular weight of the polyethylene glycol also has an influence on the performance of the modified carbon nanotubes. If the molecular weight of the polyethylene glycol is low, the chain of the polyethylene glycol is short, which may be unfavorable to the grafting of the polyethylene glycol to the inner wall of the carbon nanotube, and cannot effectively reduce the inner diameter of the carbon nanotube, resulting in the reduction of the tensile strength and conductivity of the carbon nanotubes. If the molecular weight of the polyethylene glycol is too large and the molecular chain is long, it is not favorable for the polyethylene glycol to provide a large tensile force to reduce the inner diameter of the carbon nanotube, so that the inner diameter of the carbon nanotube cannot be effectively reduced, thereby reducing the tensile strength and the conductivity of the carbon nanotubes.

## Claims

1. A method for preparing modified carbon nanotubes comprising steps of:
adding carbon nanotubes in a nitric acid solution to react at 65°C to 75°C for 10 h to 14 h, followed by washing and drying to obtain carboxylated carbon nanotubes, wherein a mass fraction of HNO₃ in the nitric acid solution is greater than or equal to 20%;
adding the carboxylated carbon nanotubes in a first mixed acid solution to react for 10 h to 14 h, followed by washing and drying to obtain first inner wall-carboxylated carbon nanotubes, wherein the first mixed acid solution is a mixed solution of concentrated nitric acid and concentrated hydrochloric acid in a volume ratio of 1: 2 to 5, a mass fraction of HNO₃ in the concentrated nitric acid is 60% to 70%, and a mass fraction of HCl in the concentrated hydrochloric acid is 30% to 38%;
adding the first inner wall-carboxylated carbon nanotubes in a second mixed acid solution, standing for 10 h to 14 h, followed by washing and drying to obtain second inner wall-carboxylated carbon nanotubes, wherein the second mixed acid solution is a mixed solution of concentrated sulfuric acid and concentrated hydrochloric acid in a volume ratio of 1: 1 to 1.5; and
mixing the second inner wall-carboxylated carbon nanotubes, a polyethylene glycol, a dispersing agent, and water to obtain a mixed system, controlling a pH of the mixed system to be 1 to 4, and reacting the mixed system under reflux in presence of nitrogen at 78°C to 85°C for 3 h to 5 h, followed by washing and drying to obtain the modified carbon nanotubes.

2. The method for preparing the modified carbon nanotubes according to claim 1, wherein in the step of mixing the second inner wall-carboxylated carbon nanotubes, the polyethylene glycol, the dispersing agent, and water to obtain the mixed system, controlling the pH of the mixed system to be 1 to 4, and reacting the mixed system under reflux in presence of nitrogen at 78°C to 85°C for 3 h to 5 h, followed by washing and drying to obtain the modified carbon nanotubes, a mass ratio of the second inner wall-carboxylated carbon nanotubes, the polyethylene glycol, and the dispersing agent is 55 to 85: 20 to 50: 3 to 5.

3. The method for preparing the modified carbon nanotubes according to claim 1, wherein in the step of adding the carbon nanotubes in the nitric acid solution to react at 65°C to 75°C for 10 h to 14 h, followed by washing and drying to obtain the carboxylated carbon nanotubes, the carbon nanotubes have a diameter of 10 nm to 30 nm.

4. The method for preparing the modified carbon nanotubes according to claim 3, wherein in the step of adding the carbon nanotubes in the nitric acid solution to react at 65°C to 75°C for 10 h to 14 h, followed by washing and drying to obtain the carboxylated carbon nanotubes, the carbon nanotubes are multi-walled carbon nanotubes.

5. The method for preparing the modified carbon nanotubes according to claim 1, wherein in the step of adding the carbon nanotubes in the nitric acid solution to react at 65°C to 75°C for 10 h to 14 h, followed by washing and drying to obtain the carboxylated carbon nanotubes, the mass fraction of HNO₃ in the nitric acid solution is 25% to 40%.

6. The method for preparing the modified carbon nanotubes according to claim 1, wherein the dispersing agent comprises at least one of an ionic surfactant or a nonionic surfactant.

7. The method for preparing the modified carbon nanotubes according to claim 6, wherein the ionic surfactant comprises at least one of sodium dodecyl benzene sulfonate, sodium dodecyl sulfate, or dodecyl dimethyl benzyl ammonium chloride.

8. The method for preparing the modified carbon nanotubes according to claim 6, wherein the nonionic surfactant comprises TNWDIS.

9. The method for preparing the modified carbon nanotubes according to any one of claims 1 to 8, wherein the dispersing agent is TNWDIS.

10. The method for preparing the modified carbon nanotubes according to claim 1, wherein in S4, a number average molecular weight of the polyethylene glycol is 600 g/mol to 4,000 g/mol.

11. The method for preparing the modified carbon nanotubes according to claim 10, wherein the number average molecular weight of the polyethylene glycol is 1,000 g/mol to 2,000 g/mol.

12. A modified carbon nanotubes prepared by using the method for preparing the modified carbon nanotubes according to any one of claims 1 to 11.

13. The modified carbon nanotubes according to claim 12, wherein inner walls of the modified carbon nanotubes are attached with carboxyl groups.

14. The modified carbon nanotubes according to claim 13, wherein the modified carbon nanotubes comprise polyethylene glycol attached to the carboxyl groups.

15. A negative electrode slurry comprising a conductive agent, wherein the conductive agent is the modified carbon nanotubes according to any one of claims 12 to 14.

16. The negative electrode slurry according to claim 15, wherein the negative electrode slurry comprises graphite, a thickening agent, and a binder.

17. A battery comprising a negative electrode sheet prepared using the negative electrode slurry according to claim 15 or 16.
